# EUROPÄISCHE PATENTSCHRIFT

(11) **EP 3 646 841 B1**
(45) Veröffentlichungstag und Bekanntmachung des Hinweises auf die Patenterteilung: **05.05.2021**
(21) Anmeldenummer: 19186985.8
(22) Anmeldetag: 18.07.2019
(51) Int. Cl.: A61G 13/04, A61G 7/005, A61G 7/008, A61G 7/018

(54) **HYDRAULISCHE HUBSÄULE**
HYDRAULIC LIFT COLUMN
COLONNE ÉLÉVATRICE HYDRAULIQUE

(30) Priorität: 02.11.2018 DE 102018127389
(43) Veröffentlichungstag der Anmeldung: 06.05.2020
(73) Patentinhaber: HAWE Altenstadt Holding GmbH, 86972 Altenstadt (DE)
(72) Erfinder: Storz, Martin, 86987 Schwabsoien (DE); Rinninger, Gerhard, 87600 Kaufbeuren (DE); Rankl, Erich, 86935 Rott (DE); Stockmeier, Thomas, 93057 Regensburg (DE); Hart, Christian, 93152 Nittendorf (DE); Aurich, Danny, 94469 Deggendorf (DE)
(74) Vertreter: Wittmer, Maximilian

(56) Entgegenhaltungen:
- EP-A1- 0 132 179
- WO-A2-02/058615
- DE-C2- 19 612 091
- DE-U1- 20 106 797

## Beschreibung

Die vorliegende Erfindung betrifft eine hydraulische Hubsäule, wie sie insbesondere im medizinischen Bereich (beispielsweise für Operationstische und Behandlungsliegen) zum Einsatz kommt und eine Basisstruktur, eine Kopfstruktur und eine sich zwischen der Basisstruktur und der Kopfstruktur erstreckende Hubstruktur umfasst, wobei die Hubstruktur hydraulische Linearaktuatoren und ein diese beaufschlagendes Hydraulikaggregat aufweist.

Im Hinblick auf derartige hydraulische Hubsäulen existiert ein reichhaltiger Stand der Technik. Zu verweisen ist beispielsweise auf EP 0 139 110 B2, US 5 621 933 A, DE 196 23 580 C2, DE 196 12 091 C2, EP 2 962 673 A1, US 8 800 983 B2, US 5 398 356 A, DE 10 2005 050 856 B4, DE 10 2011 103 546 A1 und EP 1 852 384 B1. Eine Hubsäule gemäß dem Oberbegriff von Anspruch 1 ist aus der WO 02/ 058615 A2 bekannt.

Trotz der ersichtlichen Fülle an verschiedenen Konzeptionen und Konstruktionen besteht weiterhin ein Bedarf für eine hydraulische Hubsäule, die den praxisrelevanten Anforderungen moderner Medizintechnik in besonders ausgeprägtem Maße genügt. Zu solchen Anforderungen zählen dabei insbesondere Robustheit, Tragvermögen und möglicher Gesamthub, Zuverlässigkeit, Wartungsfreundlichkeit und Hygiene. Gerade im medizinischen Bereich ist weiterhin eine geringe Geräuschentwicklung beim Heben/Senken und ein besonders sanftes, ruckfreies Einsetzen der Hub- bzw. Senkbewegung wichtig. Ein weiterer relevanter Aspekt sind die Kosten, wobei sich - infolge der dann möglichen Stückzahlen bei der Herstellung - insbesondere eine hohe Flexibilität hinsichtlich der Einsatzmöglichkeiten der Hubsäule kostenmindernd auswirkt. Im vorstehenden Sinne ist die vorliegende Erfindung darauf gerichtet, eine besonders praxistaugliche, d. h. dem vorstehend dargelegten Kriterienkatalog in ausgewogener Weise genügende hydraulische Hubsäule der eingangs genannten Art bereitzustellen.

Gelöst wird vorstehende Aufgabenstellung gemäß der vorliegenden Erfindung durch die hydraulische Hubsäule nach Anspruch 1. Demnach zeichnet sich eine hydraulische Hubsäule, welche im Übrigen gemäß dem Stand der Technik eine Basisstruktur, eine Kopfstruktur und eine sich zwischen der Basisstruktur und der Kopfstruktur erstreckende, hydraulische Linearaktuatoren und ein diese beaufschlagendes Hydraulikaggregat umfassende Hubstruktur aufweist, durch die folgenden Merkmale aus:
Die Hubstruktur umfasst vier Linearaktuatoreinheiten mit zueinander paralleler, vertikal orientierter Arbeitsrichtung. Jede Linearaktuatoreinheit umfasst einen zwei nebeneinander angeordnete Zylinderbohrungen aufweisenden Doppelzylinder und zwei Kolbenstrukturen mit parallel zueinander orientierten, gegensinnig aus dem Doppelzylinder ausfahrbaren Kolbenstangen. Dabei sind die vier unteren Kolbenstangen auf den Eckpunkten eines ersten Vierecks mit der Basisstruktur und die vier oberen Kolbenstangen auf den Eckpunkten eines zweiten Vierecks mit der Kopfstruktur verbunden.

Durch die erfindungsgemäße Ausführung der hydraulischen Hubsäule können bei dieser insbesondere die vier Linearaktuatoreinheiten die einzige geometrische Führung der Kopfstruktur relativ zu der Basisstruktur bilden. Mit anderen Worten kann in Umsetzung der vorliegenden Erfindung, ohne dass dies die Funktionsfähigkeit und Praxistauglichkeit der Hubsäule im Sinne des oben aufgezählten Kriterienkatalogs beeinträchtigen würde, auf gesonderte Führungseinrichtungen, d. h. separate Linearführungen wie beispielsweise Schwalbenschwanzführungen, Kugelspindelführungen oder dergleichen verzichtet werden. Hiervon kann die Praxistauglichkeit der Hubsäule in verschiedenster Weise in ganz erheblichem Maße profitieren. So lassen sich zu vergleichsweise geringen Kosten Hubsäulen mit einem - bezogen auf die Trag- und Leistungsfähigkeit - besonders geringen Gewicht und Raumbedarf sowie einem niedrigen Wartungsbedarf bereitstellen. Zudem reduziert sich die beim Anfahren zum Heben bzw. Senken zu überwindende Haftreibung. Dies ermöglicht ein besonders sanftes, schonendes und leises Einsetzen der Hub- bzw. Senkbewegung bei hoher Energieeffizienz. Gegenüber Hubsäulen mit zusätzlich zu den hydraulischen Linearaktuatoren vorgesehenen gesonderten Führungseinrichtungen sinkt zudem die Gefahr einer Besiedelung der Hubsäule mit Keimen, was insbesondere im medizinischen Anwendungssektor und namentlich dann von erheblicher Bedeutung sein kann, wenn die Hubstruktur nicht - beispielsweise mittels einer Balgstruktur - verkleidet bzw. gekapselt ist.

Im Interesse einer besonders günstigen Statik der erfindungsgemäßen Hubsäule ist vorteilhaft, wenn, gemäß einer ersten bevorzugten Weiterbildung der vorliegenden Erfindung, das erste Viereck flächenmäßig größer ist als das zweite Viereck. Die beiden Vierecke können dabei insbesondere als Rechtecke ausgeführt sein. Dies kommt einer möglichst gleichmäßigen Lastaufteilung auf die vier Linearaktuatoreinheiten entgegen, was seinerseits von Vorteil ist für die Praxistauglichkeit im Sinne des obigen Kriterienkatalogs.

Gemäß einer anderen bevorzugten Weiterbildung der Erfindung weisen die Doppelzylinder jeweils einen einstückigen Grundkörper auf, in dem die beiden Zylinderbohrungen ausgeführt sind. Durch die einstückige Ausführung der Grundkörper ergeben sich - verglichen mit der im Rahmen der Erfindung grundsätzlich ebenfalls möglichen Ausführung der Doppelzylinder durch starre Verbindung der Zylinderbauteile zweier gesonderter Einzelzylinder - wechselweise aussteifende Effekte, so dass sich selbst besonders hohe statische Anforderungen (namentlich hinsichtlich der Biege- und Torsionssteifigkeit) bereits mit sehr kompakten Linearaktuatoreinheiten erfüllen lassen.

Die vier Doppelzylinder können dabei, gemäß einer ganz besonders bevorzugten Weiterbildung, Teil einer festen Zylinderbaugruppe sein. Hier sind, mit anderen Worten, die vier Doppelzylinder so zu einer starren Einheit miteinander verbunden, dass sie keine Relativbewegung zueinander ausführen und im Rahmen der Hub- bzw. Senkbewegung nur gemeinsam - als Einheit - angehoben bzw. abgesenkt werden können. Die besagte Zylinderbaugruppe kann dabei, in abermals bevorzugter Weiterbildung, ferner das Hydraulikaggregat umfassen. Anders als im Falle der - im Rahmen der vorliegenden Erfindung ebenfalls möglichen - Integration des Hydraulikaggregats in die Basisstruktur bedarf es dann keiner flexiblen, die Hubbewegung ausgleichenden Hydraulikleitungen zwischen der Basisstruktur und den Doppelzylindern. Vielmehr brauchen sich zwischen der Basisstruktur und der relativ zu dieser bewegten, d. h. sich anhebenden und absenkenden, die Zylinderbaugruppe umfassenden Einheit in diesem Fall, sofern in besagter Einheit nicht sogar zusätzlich eine elektrische Versorgungsbatterie untergebracht wird, ausschließlich elektrische Leitungen (Steuerleitungen bzw. Versorgungsleitungen) zu erstrecken. Dies ist ein überaus relevanter Vorteil. Ferner lässt sich bei Unterbringung des Hydraulikaggregats in der die Zylinderbaugruppe umfassenden Einheit sogar eine direkte, ggf. gänzlich schlauchlose hydraulische Ankoppelung der Doppelzylinder an das Hydraulikaggregat realisieren.

Die nach der vorstehend erläuterten Weiterbildung der Erfindung vorgesehene Zylinderbaugruppe kann - in Umsetzung einer weitergehenden bevorzugten Ausgestaltung - insbesondere eine Grundplatte umfassen, auf der die Doppelzylinder aufgebaut sind. Die besagte Grundplatte kann dabei das tragende Bauteil der vorstehend dargelegten, die Zylinderbaugruppe umfassenden Einheit sein, insbesondere indem die Motor-Pumpe-Einheit des Hydraulikaggregats zwischen den Doppelzylindern auf der Grundplatte aufgebaut ist. Neben der statischen Funktion kann die Grundplatte auch Teil des hydraulischen Systems sein, insbesondere indem vorzugsweise in ihr Hydraulikleitungen, welche die Motor-Pumpe-Einheit des Hydraulikaggregats mit dem Tank und/oder mit den Doppelzylindern hydraulisch verbinden, Ventile und/oder sonstige hydraulisch aktive Bauelemente untergebracht sind.

Die Zylinderbaugruppe bzw. die diese umfassende Einheit weist bevorzugt eine umlaufende, sich über die vier Doppelzylinder erstreckende und diese miteinander verbindende Aussteifungsstruktur auf. Diese Aussteifungsstruktur kann namentlich Aussteifungsbleche und/oder Aussteifungsstege umfassen. Besonders bevorzugt sind am Umfang der Zylinderbaugruppe verlaufende, jeweils zwei Doppelzylinder miteinander verbindende Streben vorgesehen. Alternativ oder zusätzlich zu einer umlaufenden Aussteifungsstruktur im vorstehenden Sinne können die Doppelzylinder auch diagonal über Kreuz gegeneinander ausgesteift sein.

Ein weiterer Vorteil der weiter oben erläuterten Ausgestaltung der Erfindung, bei der die Zylinderbaugruppe das Hydraulikaggregat umfasst, besteht darin, dass ein dem Hydraulikaggregat zugehöriger Tank zwei Doppelzylinder, diese gegeneinander aussteifend, miteinander verbinden kann. Der Tank erfüllt in diesem Falle die zusätzliche Funktion einer Aussteifung der Zylinderbaugruppe. Eine gesonderte, die Doppelzylinder miteinander verbindende Aussteifungsstruktur kann dementsprechend teilweise weniger aufwendig ausfallen, indem der dem Hydraulikaggregat zugehörige Tank die Aussteifungsstruktur mit einbezogen wird. Dies begünstigt wiederum eine besonders kompakte Bauweise.

Im Interesse einer hohen Energieeffizienz kann vorgesehen sein, dass die erfindungsgemäße hydraulische Hubsäule zwischen einem ersten Betriebsmodus, in dem aller vier Linearaktuatoreinheiten aktiv durch das Hydraulikaggregat beaufschlagbar sind, und einem zweiten Betriebsmodus, in dem nur zwei der vier Linearaktuatoreinheiten aktiv durch das Hydraulikaggregat beaufschlagbar sind, umschaltbar ist. Mit anderen Worten ist vorzugsweise ein Betriebsmodus schaltbar, in dem nur zwei der vier Linearaktuatoreinheiten aktiv durch das Hydraulikaggregat beaufschlagbar sind. In diesem zweiten Betriebsmodus, in der nur zwei Linearaktuatoreinheiten das Heben und Senken der Kopfstruktur übernehmen und der insbesondere bei nur vergleichsweise geringer Hublast (ggf. automatisch) ansteuerbar ist, sind die beiden nicht aktiv beaufschlagten Linearaktuatoreinheiten gewissermaßen auf eine "Schwimmstellung" geschaltet; sie leisten allerdings auch in diesem Betriebsmodus einen Beitrag zur mechanischen Führung der Kopfstruktur und der Basisstruktur relativ zueinander. Im Einzelfall kommt für hierfür geeignete Anwendungen eine Umsetzung der vorliegenden Erfindung dergestalt in Betracht, dass bei der Hubsäule ausschließlich zwei der vier Linearaktuatoreinheiten aktiv durch das Hydraulikaggregat beaufschlagbar sind.

Gemäß einer wiederum anderen bevorzugten Weiterbildung der Erfindung sind die beiden Zylinder jedes Doppelzylinders (bzw. der beiden aktiv beaufschlagbaren Doppelzylinder) vorzugsweise in hydraulischer Parallelschaltung miteinander gekoppelt. Die beiden - permanent hydraulisch miteinander kommunizierenden - Zylinder jedes (beaufschlagten bzw. beaufschlagbaren) Doppelzylinders werden dabei ständig identisch beaufschlagt. Unter Verzicht auf hydraulisch aktive Elemente (wie Ventile oder dergleichen), welche die Beaufschlagung der einzelnen Zylinder des jeweiligen Doppelzylinders regelnd bzw. steuern beeinflussen, kann dabei dem System "überlassen" werden, ob eine Zufuhr von Hydraulikflüssigkeit zu den vier Doppelzylindern nur ein Ausfahren der oberen Kolbenstangen, nur ein Ausfahren der unteren Kolbenstangen oder aber ein gleichzeitiges Ausfahren sowohl der oberen als auch der unteren Kolbenstangen bewirkt. In dem - bevorzugten - Falle, dass beide Zylinder jedes Doppelzylinders jeweils querschnittsidentisch sind, mag eine gewisse inhärente Priorität allerdings dem Ausfahren der oberen Kolbenstangen zukommen; denn durch das Eigengewicht der Zylinderbaugruppe ist die auf den unteren Kolbenstangen ruhende Last etwas größer als die auf den oberen Kolbenstangen ruhende Last. Demensprechend ist beim Absenken der Hubsäule unter Abzug von Hydraulikflüssigkeit aus den vier Doppelzylindern zunächst mit einem Einfahren der unteren Kolbenstangen bis zu deren Anschlag zu rechnen, bevor die oberen Kolbenstangen einfahren.

Auch untereinander werden die vier (bzw. gegebenenfalls zwei) Linearaktuatoreinheiten von dem Hydraulikaggregat bevorzugt in hydraulischer Parallelschaltung beaufschlagt. Allerdings ist dabei besonders bevorzugt der Motor-Pumpe-Einheit des Hydraulikaggregats ein Mengenteiler nachgeschaltet, der die geförderte Hydraulikflüssigkeit gleichmäßig auf die vier (bzw. gegebenenfalls zwei aktiv beaufschlagten) Doppelzylinder aufteilt. Auf diese Weise lässt sich auch bei außermittigen Belastungssituationen der Hubsäule ein Gleichlauf der vier Linearaktuatoreinheiten sicherstellen. Die Gefahr interner Verspannungen der Hubsäule eben infolge außermittiger Belastungszustände wird hierdurch entscheidend reduziert.

Eine wiederum andere bevorzugte Weiterbildung der Erfindung zeichnet sich dadurch aus, dass in der hydraulischen Verbindung der Motor-Pumpe-Einheit des Hydraulikaggregats mit der Gruppe der vier Linearaktuatoreinheiten mindestens ein Sperrventil angeordnet ist. Über ein solches Sperrventil, welches in besonders bevorzugter Ausgestaltung insbesondere als ein hydraulisch entsperrbares Rückschlagventil oder ein schaltbares 2/2-Wege-Sitzventil ausgeführt sein kann, lässt sich insbesondere die Hydraulikflüssigkeit in den Doppelzylindern einsperren, wodurch einem Absinken der Kopfstruktur bei Nullförderung des Hydraulikaggregats entgegengewirkt wird. Dies ermöglicht ein zuverlässiges Halten der jeweiligen Hubstellung ohne Energieaufwand. Besonders bevorzugt sind dabei vier derartige Sperrventile vorgesehen, wobei jeder Linearaktuatoreinheit genau ein solches Sperrventil spezifisch zugeordnet ist. So lässt sich auch eine "Querströmung" von Hydraulikflüssigkeit zwischen den einzelnen Linearaktuatoreinheiten - in Reaktion auf eine Verlagerung des Lastangriffspunts an der Kopfstruktur - unterbinden, so dass die Hubsäule in der jeweils eingestellten Stellung besonders zuverlässig hydraulisch gesperrt bzw. arretiert ist. Dass die Hubsäule in diesem Fall ohne mechanische Arretierung auskommt, ist ein weiterer die Praxistauglichkeit begünstigender Aspekt. Durch Beaufschlagung des Steuereingangs des mindestens einen hydraulisch entsperrbaren Rückschlagventils bzw. entsprechende Ansteuerung des 2/2-Wege-Sitzventils auf Durchgang lässt sich die Arretierung aufheben.

Namentlich beim Einsatz der erfindungsgemäßen Hubsäule in der weiter oben bereits mehrfach angesprochenen medizinischen Anwendungsumgebung umfasst die Kopfstruktur der Hubsäule bevorzugt eine vorzugsweise kardanische Liegeflächenaufhängung. In besonders bevorzugter Ausgestaltung weist dabei die Kopfstruktur einen Kopfrahmen, an dem die vier oberen Kolbenstangen befestigt sind, einen Kreuzkopf und eine - der Abstützung der Liegefläche dienende - Lagereinheit auf, wobei der Kreuzkopf an dem Kopfrahmen um eine erste Schwenkachse und die Lagereinheit an dem Kreuzkopf um eine zweite Schwenkachse schwenkbar gelagert sind. Auf diese Weise lassen sich verschiedene der vorstehend dargelegten, aus der erfindungsgemäßen Gestaltung der Hubsäule resultierenden Vorteile in besonders ausgeprägtem Maße erzielen. Dies gilt namentlich für eine besonders kompakte Bauweise, und zwar erst recht dann, wenn die erste und die zweite Schwenkachse einander schneiden, d. h. in einer Ebene liegen, bzw. voneinander nur minimal beabstandet sind. Besonders günstig ist dabei, wenn die erste und die zweite Schwenkachse in dem durch die Höhenerstreckung des Kopfrahmens definierten Bereich liegen.

Bevorzugt weist dabei die kardanische Liegeflächenaufhängung einen zwischen dem Kopfrahmen und dem Kreuzkopf wirksamen ersten Schwenkantrieb und einen zwischen dem Kreuzkopf und der Lagereinheit wirksamen zweiten Schwenkantrieb auf. In besonders vorteilhafter Ausgestaltung sind die beiden Schwenkantriebe als Linearantriebe, insbesondere als hydraulische Linearantriebe (Hydraulikzylinder) ausgeführt und innerhalb des durch die vier oberen Kolbenstangen umschlossenen Raumes angeordnet. Diese Unterbringung nutzt in synergetischem Zusammenwirken mit der erfindungsgemäßen Gestaltung der Hubstruktur den zwischen den oberen Kolbenstangen bestehenden Raum optimal aus.

In bevorzugter Konkretisierung springen dabei von dem Kopfrahmen vorzugsweise ein erster Schwenkantriebträger und/oder von dem Kreuzkopf vorzugsweise ein zweiter Schwenkantriebträger nach unten vor. An dem ersten Schwenkantriebträger ist dabei der auf den Kreuzkopf wirkende, dessen Verstellung relativ zu dem Kopfrahmen um die erste Schwenkachse dienende erste Schwenkantrieb gelenkig abgestützt. Und an dem zweiten Schwenkantriebträger ist der auf die Lagereinheit wirkende, deren Verstellung relativ zu dem Kreuzkopf um die zweite Schwenkachse dienende zweite Schwenkantrieb gelenkig abgestützt. Unter Gesichtspunkten der Kinematik ist dabei besonders günstig, wenn von dem zweiten Schwenkantriebträger ein Lenkarm vorspringt, an welchem der erste Schwenkantrieb angreift. So lassen sich solche geometrischen Verhältnisse realisieren, welche die Bereitstellung jener Kraft, welche für das Verschwenken der (belasteten) Liegefläche um die erste Schwenkachse über den gesamten angestrebten Verschwenkbereich erforderlich ist, mittels eines vergleichsweise kompakten ersten Schwenkantriebs gestatten.

Im Folgenden wird die vorliegende Erfindung anhand zweier bevorzugter Ausführungsbeispiele näher erläutert. Dabei zeigt
- Fig. 1: in perspektivischer Gesamtansicht schräg von oben eine erste die Erfindung umsetzende hydraulische Hubsäule,
- Fig. 2: in einer Detailansicht schräg von oben die Kopfstruktur einer zweiten die Erfindung umsetzenden hydraulische Hubsäule,
- Fig. 3: die Kopfstruktur nach Fig. 2 in einer ersten Detailansicht von der Seite,
- Fig. 4: die Kopfstruktur nach den Figuren 2 und 3 in einer zweiten Detailansicht von der Seite,
- Fig. 5: die Kopfstruktur nach den Figuren 2 bis 4 in einer dritten Detailansicht von der Seite,
- Fig. 6: die Kopfstruktur nach den Figuren 2 bis 5 in einer ersten Detailansicht schräg von unten und
- Fig. 7: die Kopfstruktur nach den Figuren 2 bis 6 in einer zweiten Detailansicht schräg von unten.

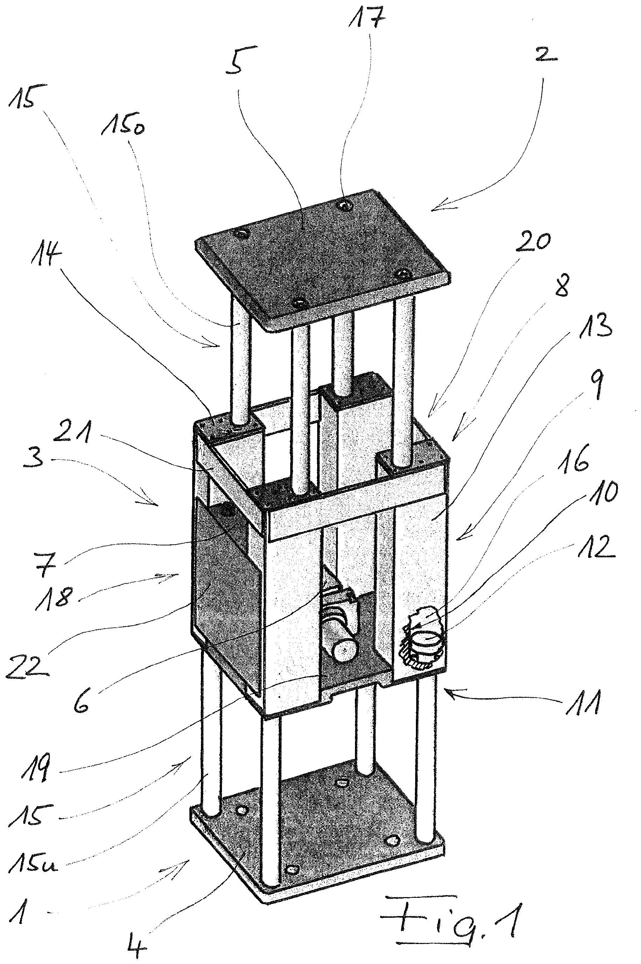

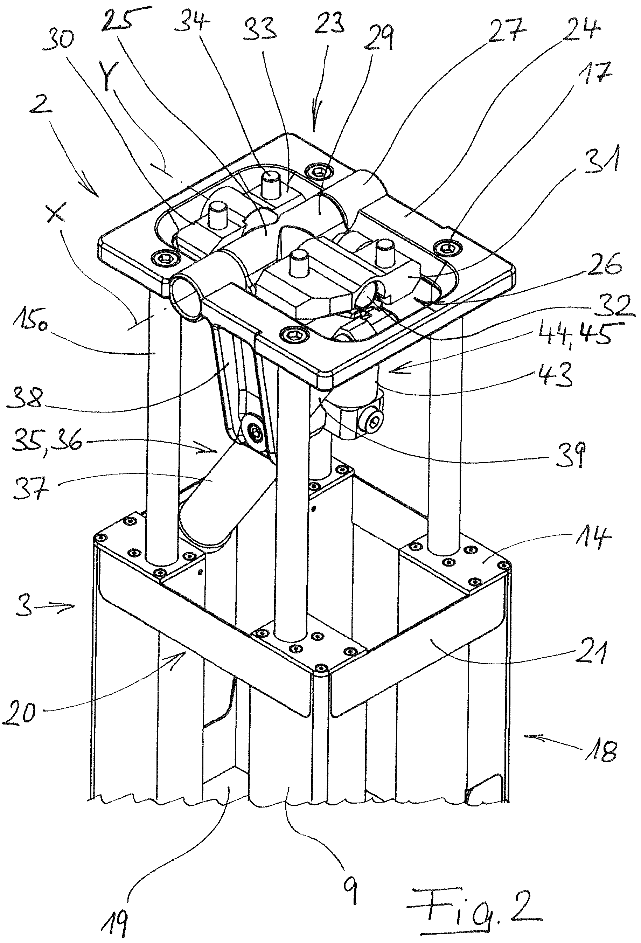

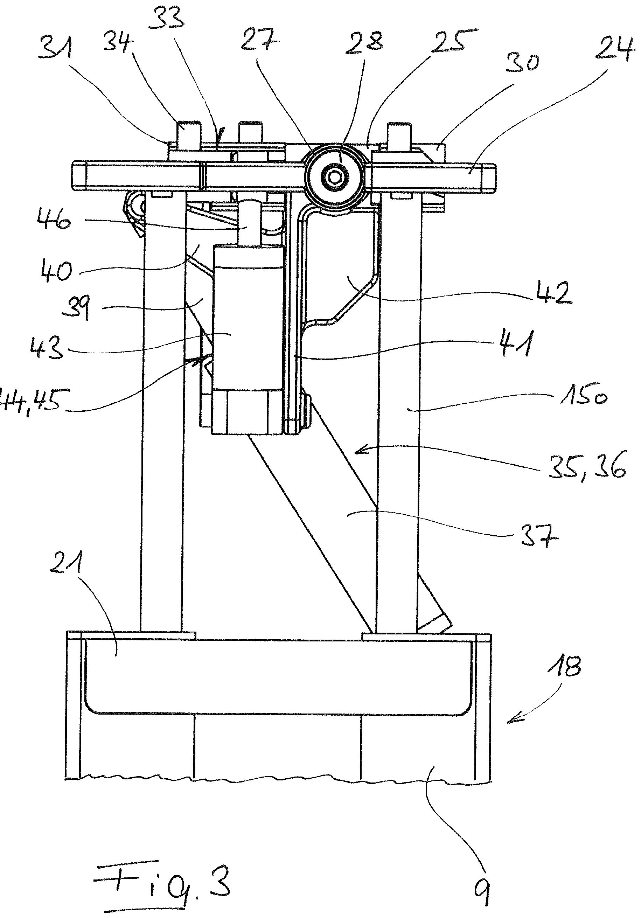

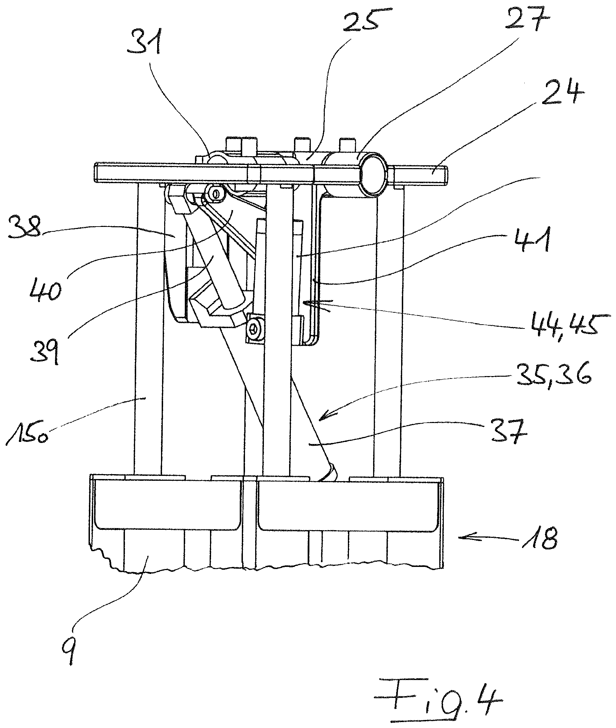

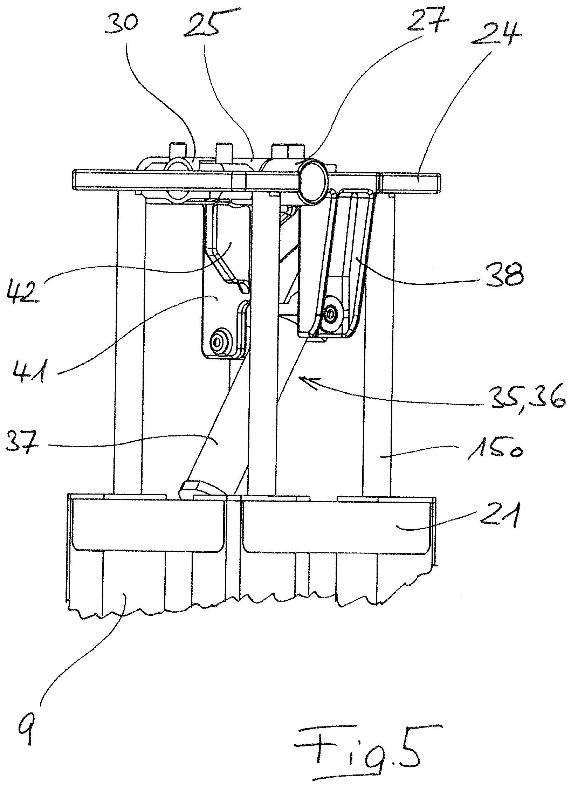

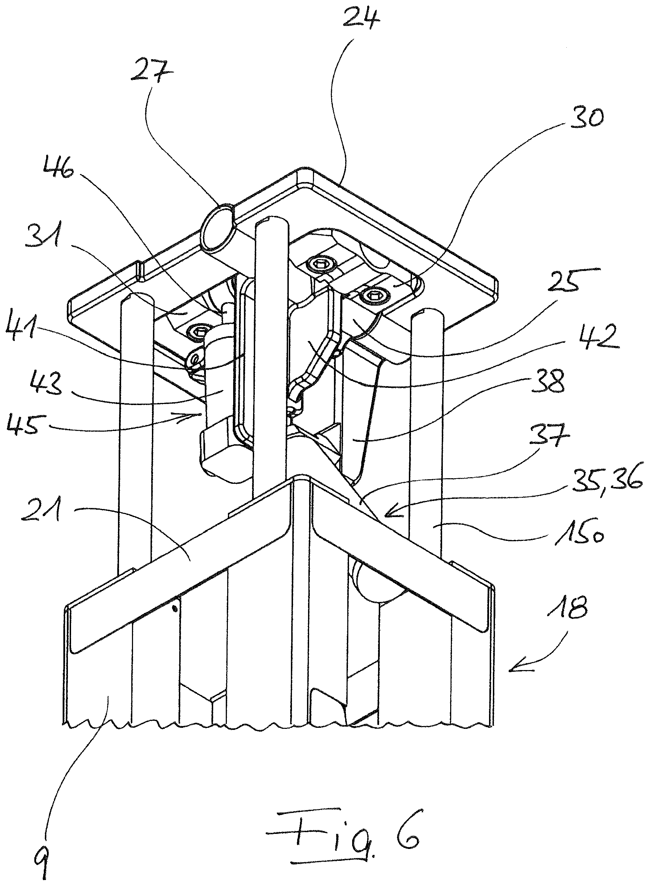

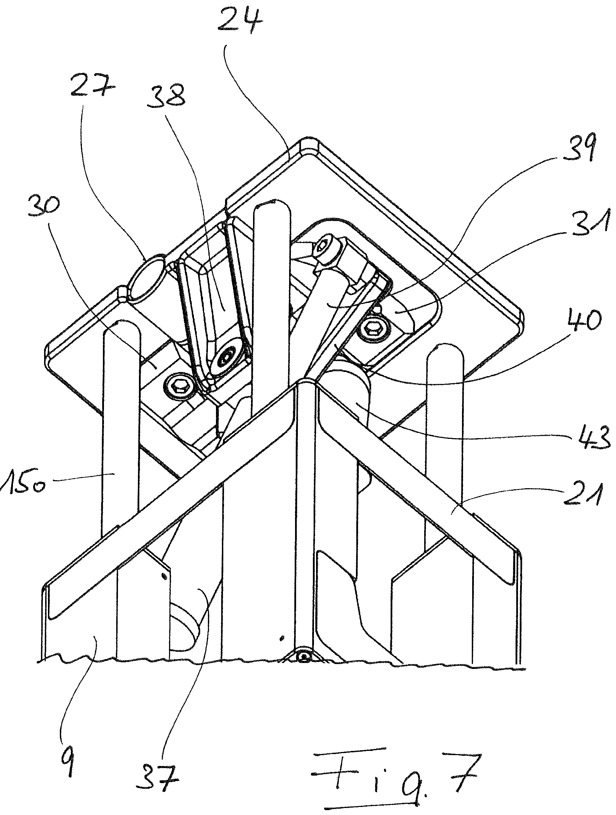

Die in Fig. 1 veranschaulichte hydraulische Hubsäule umfasst eine Basisstruktur 1, eine Kopfstruktur 2 und eine sich zwischen der Basisstruktur 1 und der Kopfstruktur 2 erstreckende Hubstruktur 3. Die Basisstruktur 1 ist dabei als Basisplatte 4 veranschaulicht. Und die Kopfstruktur 2 ist in entsprechender Weise als Kopfplatte 5 gezeigt. Andere, an die jeweilige Anwendung spezifisch angepasste Ausgestaltungen der Basisstruktur 1 und der Kopfstruktur 2 sind möglich, wie weiter unten exemplarisch unter Bezugnahme auf das in den Figuren 2 bis 7 im Detail veranschaulichte Ausführungsbeispiel näher erläutert wird.

Die Hubstruktur 3 ist von hydraulischer Art. Sie weist somit hydraulische Linearaktuatoren und ein diese beaufschlagendes Hydraulikaggregat auf, welches seinerseits eine elektrisch angetriebene Motor-Pumpe-Einheit 6 und einen Tank 7 umfasst. In Umsetzung der vorliegenden Erfindung umfasst die Hubstruktur 3 vier Linearaktuatoreinheiten 8. Jede dieser vier Linearaktuatoreinheiten 8 umfasst ihrerseits einen Doppelzylinder 9, welcher zwei nebeneinander angeordnete, parallel zueinander orientierte Zylinderbohrungen 10 aufweist, und zwei Kolbenstrukturen 11 mit in den besagten Zylinderbohrungen 10 dichtend geführten Kolben 12. Die Doppelzylinder 9 weisen jeweils einen einstückigen Grundkörper 13 und eine hiermit verbundene obere Abschlussplatte 14 auf, wobei die beiden Zylinderbohrungen 10 in dem einstückigen Grundkörper 13 ausgeführt sind.

Entsprechend den beiden Zylinderbohrungen 10 sind auch die beiden Kolbenstrukturen 11 jeder Linearaktuatoreinheit 8 jeweils parallel zueinander orientiert. Sie weisen gegensinnig aus dem Doppelzylinder 9 ausfahrbare Kolbenstangen 15 auf, nämlich eine untere Kolbenstange 15u und eine obere Kolbenstange 15o. Bei jedem Doppelzylinder 9 kommunizieren die beiden Arbeitsräume 16, deren Beaufschlagung mit Hydraulikflüssigkeit das Ausfahren der zugeordneten Kolbenstange 15 bewirkt, ständig miteinander über eine Verbindungsleitung, so dass die beiden Zylinder jedes Doppelzylinders im Ergebnis in hydraulischer Parallelschaltung miteinander gekoppelt sind.

Entsprechend dem Parallelversatz der beiden Zylinderbohrungen 10 jedes Doppelzylinders 9 sind auch die zugeordneten Kolbenstangen 15 parallel zueinander versetzt. Die obere Kolbenstange 15o tritt durch einen in der oberen Abschlussplatte 14 des betreffenden Doppelzylinders 9 vorgesehenen Durchbruch aus dem Doppelzylinder 9 aus. Die vier unteren Kolbenstangen 15u sind auf den Eckpunkten eines ersten Vierecks starr mit der Basisplatte 4 verbunden; und die vier oberen Kolbenstangen 15o sind auf den Eckpunkten eines - gegenüber dem ersten Viereck kleineren - zweiten Vierecks starr mit der Kopfplatte 5 verbunden. Die entsprechenden Befestigungsschrauben 17 sind veranschaulicht.

Die vier Doppelzylinder 9 sind Teil einer in sich starren Zylinderbaugruppe 18 von etwa quaderförmiger Grundform. Hierzu sind sie - mit zueinander paralleler, vertikal orientierter Arbeitsrichtung - auf einer rechteckigen Grundplatte 19 aufgebaut, und zwar in deren Eckbereichen. Die Zylinderbaugruppe 18 umfasst weiterhin eine umlaufende, sich über die vier Doppelzylinder 9 erstreckende und diese miteinander verbindende Aussteifungsstruktur 20. Diese ist realisiert durch vier jeweils zwei einander benachbarte Doppelzylinder 9 in deren oberen Endbereich miteinander verbindende Streben 21.

Die Zylinderbaugruppe 18 umfasst ferner das der Beaufschlagung der vier Linearaktuatoreinheiten dienende Hydraulikaggregat. Hierzu ist die Motor-Pumpe-Einheit 6 des Hydraulikaggregats zwischen den Doppelzylindern 9 auf der Grundplatte 19 der Zylinderbaugruppe 18 aufgebaut. Und ein dem Hydraulikaggregat zugehöriger Tank 7 ist zwischen zwei einander benachbarten Doppelzylindern 9 angeordnet. Teil des Tanks 7 ist dabei ein Blech 22, welches die beiden benachbarten Doppelzylinder 9, diese gegeneinander aussteifend, miteinander verbindet.

In die Grundplatte 19 sind Hydraulikleitungen integriert, welche die Motor-Pumpe-Einheit 6 des Hydraulikaggregats einerseits mit dem Tank 7 und andererseits mit den vier Doppelzylindern 9 hydraulisch verbinden. Die hydraulische Verschaltung der Motor-Pumpe-Einheit 6 mit den vier Linearaktuatoreinheiten 8 ist dabei dergestalt, dass letztere von dem Hydraulikaggregat über einen nachgeschalteten Mengenteiler in hydraulischer Parallelschaltung beaufschlagt werden.

Bei der in den Figuren 2 bis 7 - jeweils nur im Umfang des oberen Abschnitts - veranschaulichten hydraulischen Hubsäule sind die Basisstruktur und die Hubstruktur 3 im Wesentlichen übereinstimmend gestaltet zu der Hubsäule nach Fig. 1, so dass insoweit auf die vorstehenden Erläuterungen verwiesen werden und sich die zeichnerische Darstellung im Wesentlichen auf die Veranschaulichung der spezifischen Kopfstruktur 2 beschränken kann. Denn hinsichtlich dieser bestehen die maßgeblichen, nachstehend erläuterten Unterschiede zu der Ausführungsform nach Fig. 1.

Nach den Figuren 2 bis 7 umfasst die Kopfstruktur 2 nämlich eine kardanische Liegeflächenaufhängung 23. Hierzu weist sie einen Kopfrahmen 24, an dem die vier oberen Kolbenstangen 15o befestigt sind, einen Kreuzkopf 25 und eine - der Abstützung einer Patienten-Liegefläche dienende und somit gewissermaßen eine mechanische Schnittstelle bildende - Lagereinheit 26 auf. Der - einen Durchbruch aufweisende - Kopfrahmen 24 hat eine rechteckige Grundform. Der innerhalb des Durchbruchs des Kopfrahmens 24 angeordnete Kreuzkopf 25 ist an dem Kopfrahmen 24 um eine erste Schwenkachse X schwenkbar gelagert. Hierzu sind an dem Kopfrahmen 24 zwei zueinander fluchtende zylindrische Aufnahmen 27 ausgeführt, in denen Lagerzapfen 28 fixiert sind, auf welchen - über entsprechende Lagerbuchsen 29 - der Kreuzkopf 25 schwenkbar gelagert ist. Die Lagereinheit 26 ist an dem Kreuzkopf 25 um eine zweite Schwenkachse Y, welche die erste Schwenkachse X unter einem rechten Winkel schneidet, schwenkbar gelagert. Sie umfasst zwei Stützkörper 30, 31, welche über eine den Kreuzkopf 25 durchsetzende, in diesem um die zweite Schwenkachse Y drehbar gelagerte Welle 32 starr miteinander verbunden sind. Jeder der beiden Stützkörper 30, 31 weist zwei Auflageflächen 33 für die auf die Liegeflächenaufhängung 23 aufzusetzende Patienten-Liegefläche auf; auch die zugehörigen Befestigungsschrauben 34 sind exemplarisch veranschaulicht.

Die Liegeflächenaufhängung 23 weist weiterhin einen zwischen dem Kopfrahmen 24 und dem Kreuzkopf 25 wirksamen ersten Schwenkantrieb 35 in Form eines hydraulischen Linearaktuators 36 auf. Dessen Zylinderteil 37 ist gelenkig an einem von dem Kopfrahmen 24 nach unten vorspringendem ersten Schwenkantriebträger 38 angelenkt. Die zugeordnete Kolbenstange 39 greift, mit diesem gelenkig verbunden, an einem Lenkarm 40 an, der von einem zweiten Schwenkantriebträger 41 vorspringt, welcher seinerseits von dem Kreuzkopf 25 nach unten vorspringt. Erkennbar ist auch ein Aussteifungssteg 42 des Kreuzkopfes 25, der gegenüber dem Lenkarm 40 von dem zweiten Schwenkantriebsträger 41 absteht. Mit dem zweiten Schwenkantriebträger 41 ist das Zylinderteil 43 eines - ebenfalls als hydraulischer Linearaktuator 44 ausgeführten - zweiten Schwenkantriebs 45 gelenkig verbunden, welcher dergestalt zwischen dem Kreuzkopf 25 und der Lagereinheit 26 wirksam ist, dass die betreffende Kolbenstange 46, mit diesem gelenkig verbunden, an einem der beiden Stützkörper, nämlich dem Stützkörper 31, angreift. Die beiden hydraulischen Linearaktuatoren 36, 44 sind dabei doppeltwirkend ausgeführt, so dass ihre Kolbenstangen 39, 46 - unter entsprechender Beaufschlagung der jeweils zwei Arbeitsräume - aktiv sowohl aus- als auch eingefahren werden können. So kann unter Einwirkung des ersten Schwenkantriebs 35 der Kreuzkopf 25 bezüglich des Kopfrahmens 24 um die erste Schwenkachse X verschwenkt werden. Und unter Einwirkung des zweiten Schwenkantriebs 45 lässt sich die Lagereinheit 26 bezüglich des Kreuzkopfes 25 um die zweite Schwenkachse Y verschwenken.

Die beiden Schwenkantriebe 35, 45 sind so angeordnet, dass sie beim Absenken der Kopfstruktur 2 - unter Einfahren der oberen Kolbenstangen 15o in die zugeordneten Doppelzylinder 9 - innerhalb des durch die vier Streben 21 der Aussteifungsstruktur 20 der Zylinderbaugruppe 18 begrenzten Raumes Platz finden. Das Gleiche gilt für den ersten Schwenkantriebträger 38 und den zweiten Schwenkantriebträger 41. So kann der Kopfrahmen 24 bis auf die Abschlussplatten 14 der Linearaktuatoreinheiten 8 abgesenkt werden; und die Kopfstruktur 2 ragt nirgends seitlich über die Kontur der Zylinderbaugruppe 18 hinaus.

## Patentansprüche

1. Hydraulische Hubsäule, beispielsweise für einen Operationstisch, umfassend eine Basisstruktur (1), eine Kopfstruktur (2) und eine sich zwischen der Basisstruktur (1) und der Kopfstruktur (2) erstreckende, hydraulische Linearaktuatoren und ein diese beaufschlagendes Hydraulikaggregat aufweisende Hubstruktur (3), **dadurch gekennzeichnet, dass**
die Hubstruktur (3) vier Linearaktuatoreinheiten (8) mit zueinander paralleler, vertikal orientierter Arbeitsrichtung umfasst;
jede Linearaktuatoreinheit (8) einen zwei nebeneinander angeordnete Zylinderbohrungen (10) aufweisenden Doppelzylinder (9) und zwei Kolbenstrukturen (11) mit parallel zueinander orientierten, gegensinnig aus dem Doppelzylinder (9) ausfahrbaren Kolbenstangen (15) umfasst; und
dabei die vier unteren Kolbenstangen (15u) auf den Eckpunkten eines ersten Vierecks mit der Basisstruktur (1) und die vier oberen Kolbenstangen (15o) auf den Eckpunkten eines zweiten Vierecks mit der Kopfstruktur (2) verbunden sind.

2. Hubsäule nach Anspruch 1, **dadurch gekennzeichnet, dass** die vier Linearaktuatoreinheiten (8) die einzige geometrische Führung der Kopfstruktur (2) relativ zu der Basisstruktur (1) bilden.

3. Hubsäule nach Anspruch 1 oder Anspruch 2, **dadurch gekennzeichnet, dass** das erste Viereck flächenmäßig größer ist als das zweite Viereck.

4. Hubsäule nach einem der Ansprüche 1 bis 3, **dadurch gekennzeichnet, dass** die Doppelzylinder (9) jeweils einen einstückigen Grundkörper (13) aufweisen, in dem die beiden Zylinderbohrungen (10) ausgeführt sind.

5. Hubsäule nach einem der Ansprüche 1 bis 4, **dadurch gekennzeichnet, dass** die vier Doppelzylinder (9) Teil einer festen Zylinderbaugruppe (18) sind, wobei die Zylinderbaugruppe (18) vorzugsweise ferner das Hydraulikaggregat umfasst.

6. Hubsäule nach Anspruch 5, **dadurch gekennzeichnet, dass** ein dem Hydraulikaggregat zugehöriger Tank (7) zwei Doppelzylinder (9), diese gegeneinander aussteifend, miteinander verbindet.

7. Hubsäule nach Anspruch 5 oder 6, **dadurch gekennzeichnet, dass** die Zylinderbaugruppe (18) eine umlaufende, sich über die vier Doppelzylinder (9) erstreckende und diese miteinander verbindende Aussteifungsstruktur (20) umfasst, wobei die Aussteifungsstruktur (20) vorzugsweise am Umfang der Zylinderbaugruppe (18) verlaufende, jeweils zwei Doppelzylinder (9) miteinander verbindende Streben (21) umfasst.

8. Hubsäule nach einem der Ansprüche 5 bis 7, **dadurch gekennzeichnet, dass** die Doppelzylinder (9) diagonal über Kreuz gegeneinander ausgesteift sind.

9. Hubsäule nach einem der Ansprüche 5 bis 8, **dadurch gekennzeichnet, dass** die Zylinderbaugruppe (18) eine Grundplatte (19) umfasst, auf der die Doppelzylinder (9) aufgebaut sind, wobei die Motor-Pumpe-Einheit (6) des Hydraulikaggregats vorzugsweise zwischen den Doppelzylindern (9) auf der Grundplatte (19) aufgebaut ist.

10. Hubsäule nach einem der Ansprüche 1 bis 9, **dadurch gekennzeichnet, dass** die betreffenden Linearaktuatoreinheiten (8) in hydraulischer Parallelschaltung von dem Hydraulikaggregat beaufschlagt werden, wobei der Motor-Pumpe-Einheit (6) des Hydraulikaggregats bevorzugt ein Mengenteiler nachgeschaltet ist.

11. Hubsäule nach einem der Ansprüche 1 bis 10, **dadurch gekennzeichnet, dass** in der hydraulischen Verbindung der Motor-Pumpe-Einheit (6) des Hydraulikaggregats mit der Gruppe der durch dieses beaufschlagbaren Linearaktuatoreinheiten (8) mindestens ein Sperrventil, bevorzugt ein hydraulisch entsperrbares Rückschlagventil angeordnet ist.

12. Hubsäule nach eine der Ansprüche 1 bis 11, **dadurch gekennzeichnet, dass** die Kopfstruktur (2) eine Liegeflächenaufhängung (23), einen Kopfrahmen (24), an dem die vier oberen Kolbenstangen (15o) befestigt sind, einen Kreuzkopf (25) und eine Lagereinheit (26) aufweist, wobei der Kreuzkopf (25) an dem Kopfrahmen (24) um eine erste Schwenkachse (X) und die Lagereinheit (26) an dem Kreuzkopf (25) um eine zweite Schwenkachse (Y) schwenkbar gelagert ist, wobei die erste Schwenkachse (X) und die zweite Schwenkachse (Y) vorzugsweise einander schneiden und/ oder wobei die Liegeflächenaufhängung (23) vorzugsweise eine kardanische Liegeflächenaufhängung (23) ist.

13. Hubsäule nach Anspruch 12, **dadurch gekennzeichnet, dass** die Liegeflächenaufhängung (23) einen zwischen dem Kopfrahmen (24) und dem Kreuzkopf (25) wirksamen ersten Schwenkantrieb (35) und einen zwischen dem Kreuzkopf (25) und der Lagereinheit (26) wirksamen zweiten Schwenkantrieb (45) aufweist, wobei die beiden Schwenkantriebe (35, 45) vorzugsweise als Linearantriebe ausgeführt sind und vorzugsweise innerhalb des durch die vier oberen Kolbenstangen (15o) umschlossenen Raumes angeordnet sind.

14. Hubsäule nach Anspruch 13, **dadurch gekennzeichnet, dass** von dem Kopfrahmen (24) ein erster Schwenkantriebträger (38) nach unten vorspringt,
und wobei von dem Kreuzkopf (25) ein zweiter Schwenkantriebträger (41) nach unten vorspringt, wobei von dem zweiten Schwenkantriebträger (41) vorzugsweise ein Lenkarm (40) vorspringt, an welchem der erste Schwenkantrieb (35) angreift.

15. Hubsäule nach Anspruch 13, **dadurch gekennzeichnet, dass** von dem Kopfrahmen (24) ein erster Schwenkantriebträger (38) nach unten vorspringt,
oder wobei von dem Kreuzkopf (25) ein zweiter Schwenkantriebträger (41) nach unten vorspringt.

## Claims

1. Hydraulic lifting column, for example for an operating table, comprising a base structure (1), a head structure (2) and a lifting structure (3),
the lifting structure (3) comprising a hydraulic power unit and hydraulic linear actuators extending between the base structure (1) and the head structure (2), the hydraulic power unit acting on the hydraulic linear actuators;
**characterized in that**
the lifting structure (3) comprising four linear actuator units (8) with a mutually parallel, vertically oriented working direction;
each linear actuator unit (8) comprising a double cylinder (9) having two cylinder bores (10) arranged next to one another and two piston structures (11) with piston rods (15) oriented parallel to one another and extendable in opposite directions from the double cylinder (9);
the four lower piston rods (15u) are connected to the base structure (1) at the corners of a first quadrilateral and the four upper piston rods (15o) are connected to the head structure (2) at the corners of a second quadrilateral.

2. Lifting column according to claim 1, **characterized in that** the four linear actuator units (8) form the only geometrical guide of the head structure (2) relative to the base structure (1).

3. Lifting column according to claim 1 or claim 2, **characterized in that** the first quadrilateral is larger in area than the second quadrilateral.

4. Lifting column according to one of claims 1 to 3, **characterized in that** the double cylinders (9) each have a one-piece base body (13) in which the two cylinder bores (10) are formed.

5. Lifting column according to any of claims 1 to 4, **characterized in that** the four double cylinders (9) are part of a fixed cylinder assembly (18), the cylinder assembly (18) preferably further comprising the hydraulic power unit.

6. Lifting column according to claim 5, **characterized in that** a tank (7) being part of the hydraulic power unit connects two double cylinders (9) to one another, thereby stiffening them against one another.

7. Lifting column according to claim 5 or 6, **characterized in that** the cylinder assembly (18) comprises a circumferential stiffening structure (20) which extends over the four double cylinders (9) and connects them to one another, the stiffening structure (20) preferably comprising struts (21) which extend at the periphery of the cylinder assembly (18) and which connect respectively two double cylinders (9) to one another.

8. Lifting column according to one of claims 5 to 7, **characterized in that** the double cylinders (9) are stiffened diagonally crosswise against one another.

9. Lifting column according to one of claims 5 to 8, **characterized in that** the cylinder assembly (18) comprises a base plate (19) on which the double cylinders (9) are disposed, the motor-pump unit (6) of the hydraulic power unit preferably being disposed between the double cylinders (9) on the base plate (19).

10. Lifting column according to one of claims 1 to 9, **characterized in that** the hydraulic power unit acts on the respective linear actuator units (8) in hydraulic parallel connection, a flow divider preferably being connected downstream of the motor-pump unit (6) of the hydraulic power unit.

11. Lifting column according to one of claims 1 to 10, **characterized in that** at least one check valve, preferably a hydraulically pilotable non-return valve, is arranged in the hydraulic connection of the motor-pump unit (6) of the hydraulic power unit with the group of linear actuator units (8) which can be acted upon by the motor-pump unit (6).

12. Lifting column according to one of claims 1 to 11, **characterized in that** the head structure (2) has a lying surface suspension (23), a head frame (24) to which the four upper piston rods (15o) are fastened, a crosshead (25) and a bearing unit (26), wherein the crosshead (25) is pivotably mounted on the head frame (24) about a first pivot axis (X) and the bearing unit (26) is pivotally mounted on the crosshead (25) about a second pivot axis (Y), wherein the first pivot axis (X) and the second pivot axis (Y) preferably intersect each other and/or wherein the lying surface suspension (23) is preferably a cardanic lying surface suspension (23).

13. Lifting column according to claim 12, **characterized in that** the lying surface suspension (23) has a first swivel drive (35) effective between the head frame (24) and the crosshead (25) and a second swivel drive (45) effective between the crosshead (25) and the bearing unit (26), wherein the two swivel drives (35, 45) are preferably provided as linear drives and are preferably arranged within the space enclosed by the four upper piston rods (15o).

14. Lifting column according to claim 13, **characterized in that** a first swivel drive carrier (38) projects downwards from the head frame (24),
and wherein a second pivot drive carrier (41) projects downwards from the crosshead (25), wherein a steering arm (40), on which the first pivot drive (35) acts, preferably projects from the second pivot drive carrier (41).

15. Lifting column according to claim 13, **characterized in that** a first swivel drive carrier (38) projects downwards from the head frame (24),
or wherein a second pivot drive carrier (41) projects downwards from the crosshead (25).

## Revendications

1. Colonne élévatrice hydraulique, par exemple pour une table chirurgicale, comprenant une structure de base (1), une structure de tête (2), et une structure élévatrice (3) comportant des actionneurs linéaires hydrauliques, qui s'étendant entre ladite structure de base (1) et ladite structure de tête (2), et un groupe hydraulique pressurisant ceux-ci, **caractérisée en ce que** la structure élévatrice (3) comprend quatre ensembles (8) d'actionneurs linéaires à direction du déplacement verticale et parallèle l'une à l'autre ;
chaque ensemble (8) d'actionneurs linéaires comprend un cylindre double (9), qui présente deux alésages cylindriques adjacentes (10), et deux structures de piston (11) comportant des tiges de piston (15) parallèles entre elles et aptes à être étendues du cylindre double (9) en sens opposé ; et
les quatre tiges de piston inférieures (15u) étant reliées avec la structure de base (1) sur les sommets d'un premier quadrilatère et les quatre tiges de piston supérieures (15o) étant reliées avec la structure de tête (2) sur les sommets d'un deuxième quadrilatère.

2. Colonne élévatrice selon la revendication 1, **caractérisée en ce que** lesdits quatre ensembles (8) d'actionneurs linéaires forment le seul guidage géométrique de la structure de tête (2) par rapport à la structure de base (1).

3. Colonne élévatrice selon la revendication 1 ou la revendication 2, **caractérisée en ce que** l'aire du premier quadrilatère est supérieure à l'aire du deuxième quadrilatère.

4. Colonne élévatrice selon l'une quelconque des revendications 1 à 3, **caractérisée en ce que** chacun des cylindres doubles (9) comprend un corps de base (13) en une seule pièce dans lequel les deux alésages cylindriques (10) sont prévus.

5. Colonne élévatrice selon l'une quelconque des revendications 1 à 4, **caractérisée en ce que** les quatre cylindres doubles (9) font partie d'un ensemble solide (18) de cylindres, ledit ensemble (18) de cylindres comprenant de préférence en outre le groupe hydraulique.

6. Colonne élévatrice selon la revendication 5, **caractérisée en ce qu'**un réservoir (7) associé au groupe hydraulique relie deux cylindres doubles (9) entre eux en produisant un renforcement mutuel.

7. Colonne élévatrice selon la revendication 5 ou 6, **caractérisée en ce que** ledit ensemble (18) de cylindres comprend une structure de renforcement (20) périphérique qui s'étend sur les quatre cylindres doubles (9) et relie ceux-ci entre eux, ladite structure de renforcement (20) comprenant des entretoises (21) qui s'étendent de préférence sur la périphérie dudit ensemble (18) de cylindres et relient dans chaque cas deux cylindres doubles (9) entre eux.

8. Colonne élévatrice selon l'une quelconque des revendications 5 à 7, **caractérisée en ce que** le renforcement mutuel des cylindres doubles (9) est effectué par un agencement en diagonale et croisé.

9. Colonne élévatrice selon l'une quelconque des revendications 5 à 8, **caractérisée en ce que** ledit ensemble (18) de cylindres comprend une plaque de base (19) sur laquelle les cylindres doubles (9) sont basés, l'ensemble (6) moteur-pompe du groupe hydraulique étant de préférence basé sur ladite plaque de base (19) entre les cylindres doubles (9).

10. Colonne élévatrice selon l'une quelconque des revendications 1 à 9, **caractérisée en ce que** les ensembles (8) respectifs d'actionneurs linéaires sont pressurisés hydrauliquement en parallèle par le groupe hydraulique, en aval de l'ensemble (6) moteur-pompe de préférence étant disposé un diviseur de débit.

11. Colonne élévatrice selon l'une quelconque des revendications 1 à 10, **caractérisée en ce que**, dans la liaison hydraulique de l'ensemble (6) moteur-pompe du groupe hydraulique avec le groupe des ensembles (8) d'actionneurs linéaires pressurisés par celui-ci, au moins une valve d'obturation est disposée, de préférence un clapet anti-retour piloté par voie hydraulique.

12. Colonne élévatrice selon l'une quelconque des revendications 1 à 11, **caractérisée** en ce la structure de tête (2) comprend une suspension de plan de couchage (23), un cadre de tête (24) sur lequel les quatre tiges de piston supérieures (15o) sont attachés, un croisillon (25) et un ensemble de support (26), ledit croisillon (25) étant supporté sur le cadre de tête (24) de façon à pouvoir pivoter autour d'un premier axe de pivotement (X) et ledit ensemble de support (26) étant supporté sur ledit croisillon (25) de façon à pouvoir pivoter autour d'un deuxième axe de pivotement (Y), ledit premier axe de pivotement (X) et ledit deuxième axe de pivotement (Y) de préférence étant sécants l'un à l'autre et/ou ladite suspension de plan de couchage (23) de préférence étant une suspension de plan de couchage (23) à cardan.

13. Colonne élévatrice selon la revendication 12, **caractérisée en ce que** ladite suspension de plan de couchage (23) comprend un premier entraînement pivotant (35) opérant entre le cadre de tête (24) et le croisillon (25) et un deuxième entraînement pivotant (45) opérant entre le croisillon (25) et ledit ensemble de support (26), lesdits entraînements pivotants (35, 45) étant de préférence réalisés en forme d'entraînements linéaires et étant disposés de préférence à l'intérieur de l'espace circonscrit par les quatre tiges de piston supérieures (15o).

14. Colonne élévatrice selon la revendication 13, **caractérisée en ce qu'**une première console d'entraînement pivotant (38) fait saillie vers le bas depuis ledit cadre de tête (24), et une deuxième console d'entraînement pivotant (41) faisant saillie vers le bas depuis ledit croisillon (25), de préférence un levier (40) faisant saillie depuis ladite deuxième console d'entraînement pivotant (41), ledit levier étant le point d'application du premier entraînement pivotant (35).

15. Colonne élévatrice selon la revendication 13, **caractérisée en ce qu'**une première console d'entraînement pivotant (38) fait saillie vers le bas depuis ledit cadre de tête (24), ou une deuxième console d'entraînement pivotant (41) faisant saillie vers le bas depuis ledit croisillon (25).
